# EUROPEAN PATENT APPLICATION

(11) **EP 2 533 323 A1**
(43) Date of publication of application: **12.12.2012**
(21) Application number: 11737212.8
(22) Date of filing: 01.02.2011
(51) Int. Cl.: H01M 2/04, H01M 10/04

(54) **BATTERY, BATTERY PRODUCTION DEVICE, AND BATTERY PRODUCTION METHOD**

(30) Priority: 01.02.2010 JP 2010020325
(71) Applicant: Mitsubishi Heavy Industries, Ltd., Tokyo 108-8215 (JP)
(72) Inventor: HIRAI, Tsuyoshi, Tokyo 108-8215 (JP)
(74) Representative: Henkel, Breuer & Partner
(86) International application number: PCT/JP2011/051995
(87) International publication number: WO 2011/093503

(57) **Abstract**

A battery of the invention includes: a machine part (20) having an opening opened from at least one edge thereof and a cover (21) having an outer diameter larger than the diameter of the opening and covering the opening. The cover (21) is fitted to the outside of the casing body (20) by an outside-fitting, and the edge of the cover (21) and the casing body (20) are welded to each other to form a battery case (10). Because the cover(21) is fitted and welded to the outside of the casing body (20), the cover (21) does not fall into the casing body (20), and metal melted during the welding of the cover does not flow into the inside of the casing body (20).

## Description

### Technical Field

The present invention relates to a battery, a battery manufacturing machine, and a battery manufacturing method.
Priority is claimed on Japanese Patent Application No. 2010-020325, filed on February 1, 2010, the content of which is incorporated herein by reference.

### Background Art

A unit cell or an assembled battery has been used as a power supply of an electronic device or the like. As an example of the assembled battery, recently, a secondary battery such as a lithium ion secondary battery with high energy density has been developed. And the unit cell or the assembled battery has been used as a part of a home electrical storage device or as a power supply of an electric vehicle, because they have high energy density.

Here, the secondary battery includes a battery case storing an electrolyte, an electrode sheet being soaked in the electrolyte, and an electrode terminal being electrically connected to the electrode sheet. And, the electrode terminal is arranged on the battery case. The battery case includes, for example, the casing body having an opening, and a cover closing the opening. The electrode plate is inserted in the casing body from the opening and the cover is attached to close and to seal the opening hermetically.

As a method of attaching the cover to the casing body, a technique disclosed in Patent Document 1 may be exemplified. In Patent Document 1, the cover is fitted to the inside of the opening of the casing body. Hereinafter, the method of fitting the cover to the opening as described in Patent Document 1 is defined as "inside-fitting". The cover and the casing body is welded and connected by a laser welding machine, after the edge of the casing body and the cover are leveled by the inside-fitting. In the specification, the inside-fitting indicates a technique to fit the cover into the battery case. Therefore the cover has an outer diameter substantially equal to the diameter of the opening of the casing body.

### Citation List

### Patent Literature

[Patent Document 1] Japanese Patent Application Laid-Open No. 2003-181666

### Summary of Invention

### Technical Problem

In Patent Document 1, because the cover is inside-fitted to the casing body, there are problems as below.
As a first problem, because the cover fits to the opening by the inside-fitting the cover may fall into the casing body erroneously during the inside-fitting. For preventing the cover from falling into the casing body, for example, the edge of the casing body around the opening may be formed to be thinner at the upper part of the main body than the other parts in order that the cover is held by other parts. According to this method, it is possible to prevent the cover from falling into the casing body, but productivity is may become worse because highly precise cutting is necessary for making the shape of the upper part.

Further, in Patent Document 1, the casing body and the cover are welded each other while the opening is arranged at the upper side of casing body. It is a second Problem that the method, the molten metal by the welding flows into the inside of the casing body and the molten metal contact the inside of the battery case, a defect such as short-circuit may occur.

The invention is made to solve these problems described above, and it is an object of the invention to provide the battery which is assembled at low cost, and to provide a manufacturing machine of battery.

### Solution to Problem

A battery comprising: a casing body having an opening opened from at least one edge thereof; and a cover having an outer diameter larger than the diameter of the opening and covering the opening; wherein the cover is fitted to the outside of the casing body by an outside-fitting, and the edge of the cover and the casing body are welded to each other to form a battery case.

In this manner, because the cover is fitted to the casing body to the casing body by the outside-fitting described later, the cover does not fall into the casing body when the cover is fitted to the casing body. Therefore, compared with the inside-fitting, it is possible to obtain the battery having the cover fitted to the casing body easily. Therefore, the battery may be made at low cost. Further, because the cover is welded to the outer peripheral surface of the casing body, the metal melted during the welding of the cover does not flow into the inside of the casing body. Therefore, the short-circuit is not easily occurred.

A battery manufacturing machine according to the invention, the battery manufacturing machine includes: a support table on which the battery is placed; a reversing mechanism that holds and reverses the casing body; a welding machine for welding the edge of the cover and the casing body to each other; and a controller that controls the reversing mechanism and the welding machine, wherein the support table is provided with an recess part that receives an electrode terminal of the battery, and the controller controls the reversing mechanism in order that the casing body is reversed and put on the support table for the electrode terminal to received in the recess part, and the controller controls the welding machine in order that the edge of the cover and the casing body are welded to each other by the welding machine.

A battery manufacturing method of manufacturing the battery according to the invention, the battery manufacturing method comprising: fitting the cover to the outside of the casing body by the outside-fitting; reversing the casing body having the cover fitted to the outside thereof; and welding the edge of the cover and the battery body to each other after the reversing.

According to the battery manufacturing machine of the invention or the battery manufacturing method of the invention, the cover is fitted to the outside of the casing body, the casing body and the cover is reversed, and the cover and the casing body are welding each other. Therefore, it is possible to prevent the cover from falling in the casing body. And, it is possible to easily and reliably fit the cover to the casing body, and to efficiently and highly-precisely weld the cover to the casing body for sealing the battery tightly. Further, because the metal melted during the welding does not stream into the inside of the casing body, an excellent battery may be manufactured. Further, it is possible to manufacture an excellent battery at low cost.

### Advantageous Effects of Invention

In the invention, because the cover is fitted and welded to the outside of the casing body, it is possible to reduce the assembly cost of the battery and prevent molten metal from entering the casing body during the welding. Further, it is possible to manufacture the excellent battery at low cost.

### Brief Description of Drawings

FIG. 1 illustrates a perspective view of one embodiment of a battery according to the invention.
FIG. 2A illustrates a cross-sectional view along the line A-A' of FIG. 1, and FIG. 2B illustrates a cross-sectional view along the line B-B' of FIG. 1.
FIG. 3 illustrates a flowchart for one embodiment of a battery case manufacturing method.
FIGS. 4A to 4C illustrate process diagrams of a process for a casing body.
FIGS. 5A to 5D illustrate process diagrams of a process for a cover.
FIGS. 6A and 6B illustrate process diagrams of a process of assembling the cover and the casing body.

### Description of Embodiments

Hereinafter, an embodiment of the invention is described by referring to the drawings. In the drawings, the dimensions or the scales of the structures of the drawings may be different from those of the real structure in order that characteristic of the invention is easily understood. Further, the same reference marks or numbers will be given to the same components of the embodiments, and a parts of the same marks may not be described again.

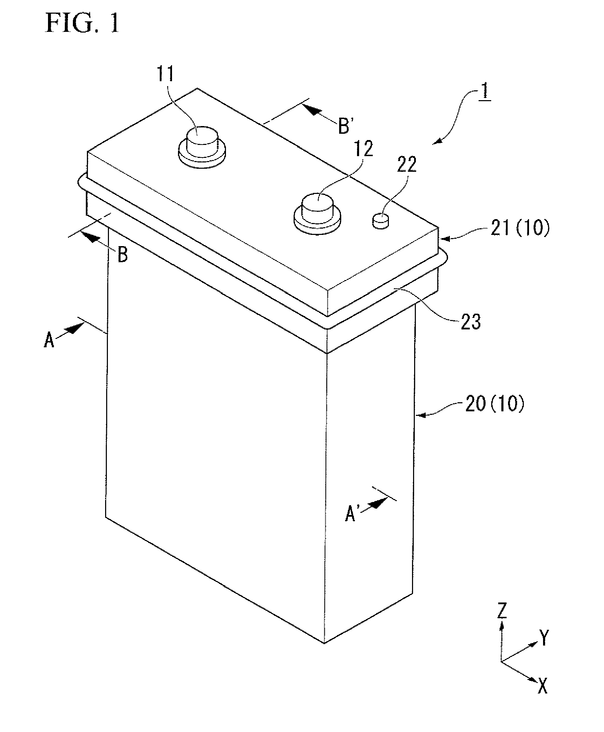

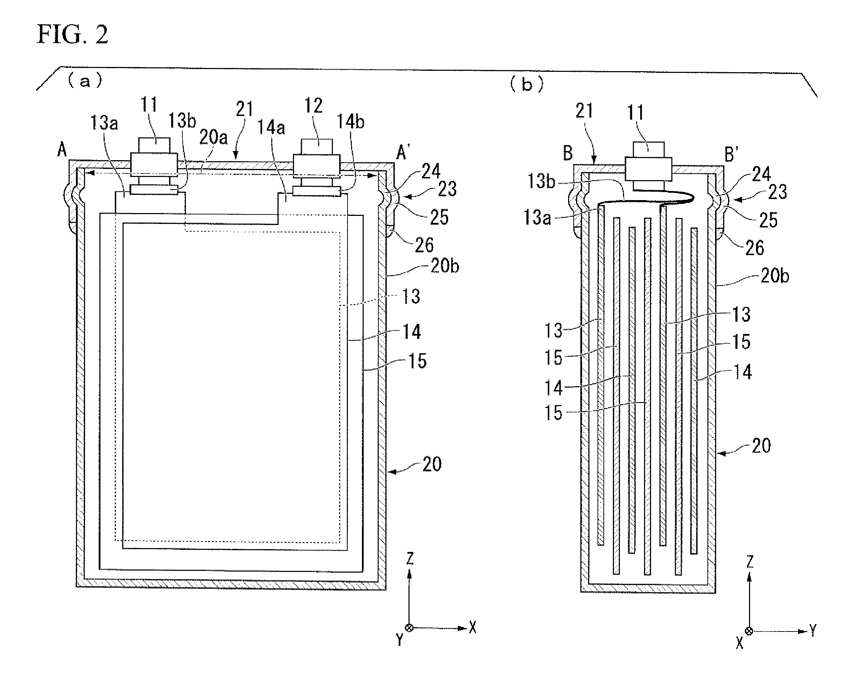

FIG. 1 illustrates a perspective view of a schematic configuration of a secondary battery 1 as one embodiment of the invention, FIG. 2A illustrates a cross-sectional view taken along the line A-A' of FIG. 1, and FIG. 2B illustrates a cross-sectional view taken along the line B-B' of FIG. 1. The secondary battery 1 of the embodiment is a lithium ion secondary battery which is a stacked type, but the application scope of the invention is not limited to the lithium ion secondary battery. The invention may be applied to a battery such as a wound lithium ion secondary battery which is a wound type, a secondary battery other than the lithium ion secondary battery, or a primary battery.

As shown in FIG. 1, the secondary battery 1 includes a battery case 10, and the electrode terminals (i.e., a positive electrode terminal 11 and a negative electrode terminal 12). The battery case 10 includes a casing body 20 of which one end is opened and a cover 21 which closes the opening of the casing body 20. Furthermore, the battery case 10 is a metallic case made of aluminum in a substantially rectangular parallelepiped shape. The outer shape of the battery case 10 may be a shape other than the substantially rectangular column shape (e.g., a substantially cylindrical shape).

The casing body 20 has a shape which has a wall surface surrounding the periphery of an axis in an annular shape (e.g., a cylindrical shape or a rectangular column shape). The outline of the casing body 20 perpendicular to the axis passing through the opening is any one of a closed curve such as a circle and an oval, a polygon, a shape obtained by making the corner of the polygon round, a shape (e.g., an ellipse) obtained by the combination thereof. Further, the outline of the inside of the casing body 20 perpendicular to the axis may be line like a circle or like a polygon.

The positive electrode terminal 11 and the negative electrode terminal 12 are arranged at a surface of the battery case 10. The positive electrode terminal 11 and the negative electrode terminal 12 are formed in a column shape (e.g., a cylindrical shape), and protrudes in the direction perpendicular to the surface where the terminal is arranged. The positive electrode terminal 11 is electrically connected to the battery case 10 through un-illustrated connection part (e.g., it has a highly resistance). The potential of the battery case 10 is controlled in order that it is substantially equal to that of, for example, the positive electrode terminal 11. So the reaction between the battery case 10 and lithium ions is prevented.

Hereinafter, a positional relation of components will be described on the basis of the XYZ orthogonal coordinate system shown in FIG. 1.
In the XYZ orthogonal coordinate system, the X direction and the Y direction are a direction along the surface where the electrode terminal is arranged, and the Z direction is a direction along a normal like which is perpendicular to the surface. Here, the direction for arranging the positive electrode terminal 11 and the negative electrode terminal 12 is the X direction. The negative electrode terminal 12 is arranged to the +X direction from the positive electrode terminal 11.

As shown in FIGS. 2A and 2B, the casing body 20 is a substantially rectangular-column-shaped hollow case with an opening 20a. The cover 21 is fitted to the outside of the casing body 20 to close and cover the opening 20a. Hereinafter, this method for fitting the cover is defined as the "outside-fitting"). Furthermore, in the embodiment, the cover 21 is weld for fitting to the casing body 20 to the external surface 20b at a welding portion 26 of the cover 21. Furthermore, the cover 21 has a through-hole, and the positive electrode terminal 11 and the negative electrode terminal 12 are arranged at the through-hole with an insulating member. Furthermore, as shown in FIG. 1, the cover 21 has injection port 22 for injecting electrolyte above the opening 20a.

In the embodiment, the cover 21 has convex part 24 at the outside of the casing body 20. Here, the convex part 24 is formed around the external surface 20b where is the periphery of the casing body 20 about the Z-axis. A concave part 25 corresponding to the shape of the convex part 24 is formed around the internal surface of the cover 21. The convex part 24 and the concave part 25 are formed by pressing working and those are fitted to each other. Furthermore, as described below, the convex part 24 or the concave part 25 may not be necessarily formed all around the external surface of the casing body or the internal surface of the cover. For example, the convex part 24 or the concave part 25 may be intermittently formed.

Positive electrode sheets 13 and negative electrode sheets 14 are repeatedly arranged in the Y direction. The positive electrode sheet 13 is arranged to the negative electrode sheet 14 face-to-face. A separator 15 is inserted between the positive electrode sheet 13 and the negative electrode sheet 14. The positive electrode sheet 13 does not contact the negative electrode sheet 14 are formed of a conductive foil or a conductive thin sheet.

The positive electrode sheet 13 has a positive electrode tab 13a. The positive electrode tab 13a is electrically connected to a connection part 13b, and the connection part 13b is electrically connected to the positive electrode terminal 11. The positive electrode tabs 13a of the plurality of positive electrode sheets 13 are gathered and electrically connected to the positive electrode terminal 11.

The negative electrode sheet 14 has a negative electrode tab 14a. The negative electrode tab 14a is electrically connected to a connection part 14b, and the connection part 14b is electrically connected to the negative electrode terminal 12. The negative electrode tabs 14a of the plurality of negative electrode sheets 14 are gathered and electrically connected to the negative electrode terminal 12.

The battery case 10 stores electrolyte containing lithium ion, that is an electrolytic solution containing lithium ion or a solid material containing lithium ion. The battery case 10 is insulated from the electrode sheets by coating the inner surface of the battery case 10, for example, with an insulating film.

According to the battery case 10, Because the cover 21 is fitted to the outside of the casing body 20, the cover 21 does not fall into the casing body 20 and the battery case 10 is easily assembled with compared to the inside-fitting.

Because, the concave part 25 of the cover 21 is fitted to the convex part 24 of the casing body 20, it is possible to assemble and weld them easily. Furthermore, even when molten metal flows into the casing body 20, the molten metal stays at the fitting part 23. The convex part 24 and the concave part 25 are fitted each other at the fitting part 23. In particular, because the convex part 24 and the concave part 25 are formed throughout the external surface 20b in the circumferential direction, it is possible to reliably prevent the molten metal from flowing into the casing body 20.

Because the battery case 10 is easily assembled, manufacturing costs are reduced. Further, molten metal generated by the welding does not flow into the casing body 20, it is possible to prevent the short-circuit. Thus, the secondary battery 1 according to the invention is made at low cost, and the battery characteristics are satisfactory.

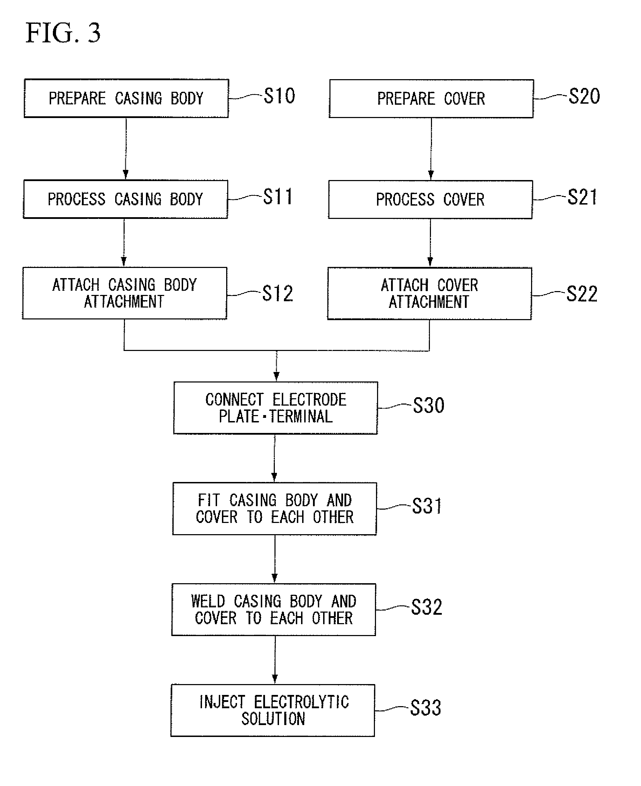

Next, one embodiment of a secondary battery manufacturing method according to the invention will be described. FIG. 3 illustrates a flowchart of one embodiment of the secondary battery manufacturing method. As shown in FIG. 3, the method of manufacturing the secondary battery 1 schematically includes the following steps. Furthermore, in the description below, a case in which a manufacturing process is an automated line will be described, but the invention is not limited thereto, and one or more steps or a part of each step may be manually performed.

First, in step S 10, a casing body is prepared for manufacturing the secondary battery. Specifically, the casing body is prepared and conveyed to the next step by using a conveying device (e.g. a belt conveyor). In step S11, the casing body is processed to form a convex part. In step S12, electrode sheets are stored into the casing body. Further, in step S20, a cover is prepared and the step S20 is started together with step S10. Specifically, the cover is prepared and conveyed to the next step by using a conveying device such as a belt conveyor. In step S21, the cover is pressed to form concave part. In step S22, an electrode terminal is attached to the cover. Specifically, the cover and the electrode terminal are bonded to each other by a resin. After step S 12 and step S22 are completed, in step S30, the electrode sheet and the electrode terminal are electrically connected to each other. In step S31, the cover is fitted to the outside of the casing body by outside-fitting. In step S32, the battery case is manufactured by welding the casing body and the cover to each other. In step S33, an electrolyte is injected into the battery case to form a secondary battery.

Hereinafter, each step of the method of manufacturing the secondary battery 1 will be specifically described.

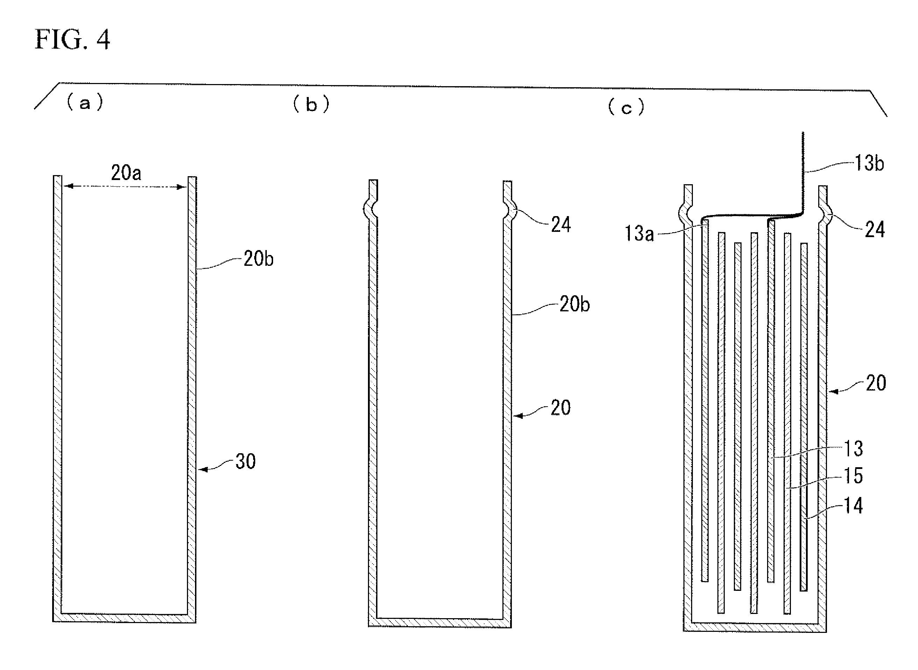

FIGS. 4A to 4C illustrate process diagrams of a process for the casing body.
As shown in FIG. 4A, a casing body 30 with the opening 20a is prepared (step S 10). The casing body 30 is the casing body 20 without the convex part 24. Subsequently, as shown in FIG. 4B, the convex part 24 is formed in the casing body 30 to form the casing body 20 (step S11). The convex part 24 is formed by pressing the casing body 30. Subsequently, as shown in FIG. 4C, the positive electrode sheet 13 having the connection part 13b, the negative electrode sheet 14 having the connection part 14b (not shown) and, the separator 15 are inserted in the casing body 20 (step S12).
Furthermore, for example, the convex part 24 may not be formed due to a circumstance such as a cost reduction request or a design specification of the secondary battery 1. In this case, step S11 is omitted, and step S12 is progressed.

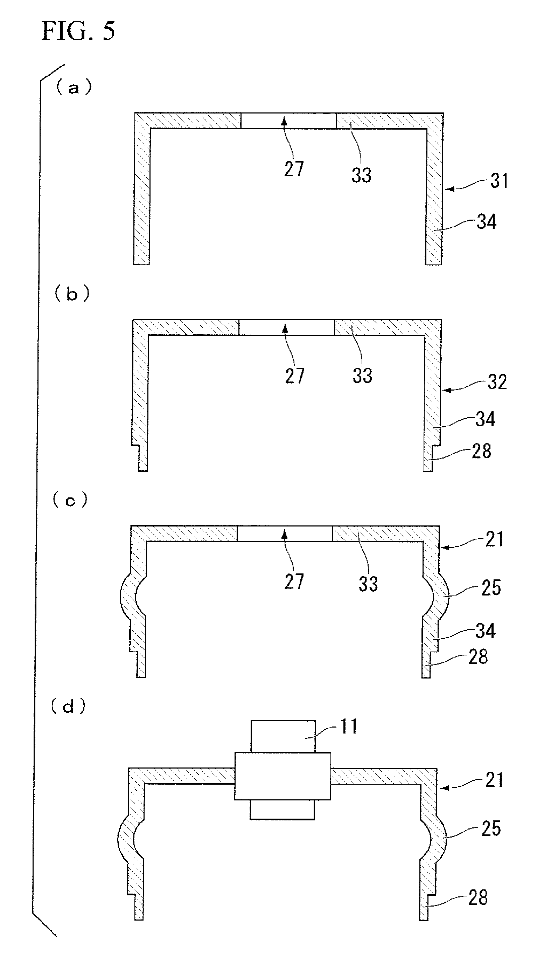

FIGS. 5A to 5D illustrate process diagrams of a process for the cover.
As shown in FIG. 5A, a cover 31 is prepared (step S20). Here, the cover 31 has an attachment hole 27 used to attach the positive electrode terminal 11 at the top plate 33 of the cover 31. Subsequently, as shown in FIG. 5B, a thin part 28 is formed by pressing the edge of a side wall 34 of the cover 31. The thin part 28 with compared to the thickness of the side wall 34 (step S21). The thin part 28 is used as a welding part in the welding to be described later. The side wall 34 of the cover 31 is a part that covers the external surface 20b of the casing body 20 when the cover 31 is attached to the casing body 20. Subsequently, as shown in FIG. 5C, the concave part 25 is formed in the cover 32 to form the cover 21 (step S21). The concave part 25 may be formed by the pressing or the like. Subsequently, as shown in FIG. 5D, the positive electrode terminal 11 and the negative electrode terminal 12 (not shown) are attached to the attachment holes 27 of the cover 21 (step S22).

Further, as described above, when the casing body is not formed with the convex part, the corresponding concave part 25 may not be formed. The thin part 28 may be also omitted. The attachment hole 27 may be formed ahead of step S22 and may be formed in step S21.

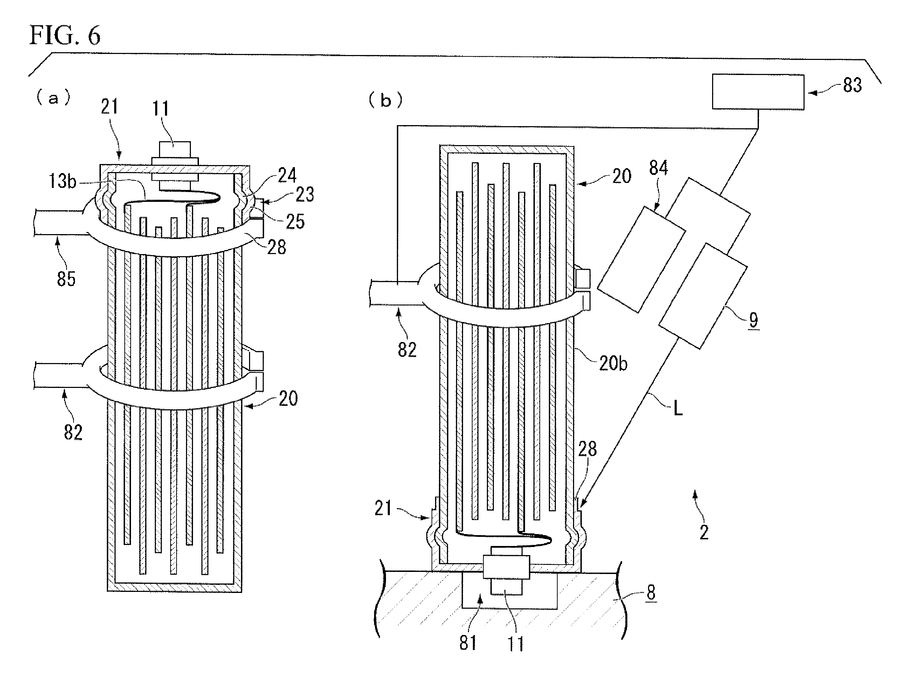

FIGS. 6A and 6B illustrate process diagrams of a process assembling the cover and the casing body.
In order to assemble the cover 21 and the casing body 20, as shown in FIG. 6A, the connection part 13b is electrically connected to the positive electrode terminal 11, and the cover 21 is fitted to the outside of the casing body 20 (step S30 and step S31). Here, the cover 21 is joined and pushed into the casing body 20 by using a handler in order that the convex part 24 is fitted to the concave part 25. Because the convex part 24 is fitted to the concave part 25, a positional deviation between the cover 21 and the casing body 20 does not easily occur. Subsequently, as shown in FIG. 6B, the casing body 20 is reversed and held by the handler, while the cover 21 is put on a support table 8. And then the edge of the side wall 34 (FIG. 5) of the cover 21, that is, the thin part 28 or the vicinity of the thin part 28 is welded to the external surface 20b of the casing body 20 (step S32).

In the embodiment, the casing body 20 and the cover 21 are welded by welding machine such as a laser welding equipment 9 while the casing body is placed upside down and the opening is directed downward. Hereinafter, the operation of directing the cover 21 attached to the casing body 20 downward is referred to as the "reversing". The support table 8 has a recess part 81 that receives the positive electrode terminal 11 or the negative electrode terminal 12 protruding from the cover 21. The laser welding machine 9 includes a laser beam source, an optical system with uniform optical intensity, and is used to emit a laser beam L to a welding portion.

Accordingly, in the method of manufacturing the secondary battery 1 of the embodiment, because of the reversing, it is possible to see the inner surface of the cover 21 and the external surface 20b of the casing body 20 from the upside when they are welded. In other words, a degree of freedom of the direction in which the laser beam L is emitted increases, and a bad influence or the like of the laser beam L reflected from the welding portion may be easily prevented. Further, the position of the welding portion may be highly precisely controlled.

Further, it is possible to prevent molten metal from flowing into the casing body 20, when welding the cover 21 and the casing body 20 to each other. The molten metal enters a boundary surface between the inner surface of the cover 21 and the external surface 20b of the casing body 20. Accordingly, the battery case is hermetically sealed. In other words, the air gap between the outer diameter of the casing body 20 and the inner diameter of the cover 21, is buried effectively. In the case that the fitting part 23 including the convex part 24 and the concave part 25 is formed, because the molten metal is blocked by the fitting part 23, it is possible to sufficiently prevent the molten metal from extending downward from the fitting part 23.

Accordingly after the cover 21 is welded to the casing body 20 and the electrolyte is injected into the battery case 10 through the electrolyte injection port 22, the secondary battery 1 is obtained (step S33).

As shown in FIG. 6, a machine 2 for manufacturing the secondary battery 1 schematically has the following structure. In the description below, the same reference marks will be given to the same components and members, and the description thereof will be appropriately omitted.

The machine 2 for manufacturing the secondary battery 1 includes at least a cover fitting mechanism 85 that makes the outside-fitting and the casing body 20, a reversing mechanism 82 that reverses the casing body 20 being made the outside-fitting to the cover 21, the support table 8, the laser welding equipment 9, and a controller 83 that controls the reversing mechanism 82 and the laser welding equipment 9.
If necessary, the machine may further include a mechanism that forms the convex part 24 or the concave part 25, or a mechanism that injects an electrolyte.

The cover fitting mechanism 85 and the reversing mechanism 82 are, for example, handlers. The cover fitting mechanism 85 has a function of making the outside-fitting while the reversing mechanism 82 holds the casing body 20. During the outside-fitting the casing body 20 is held by the reversing mechanism 82 while the casing body 20 is put on a working table. The reversing mechanism 82 has a function of reversing the casing body 20. On the basis of the control signal from the controller 83, the reversing mechanism 82 reverses the casing body 20 to put on the support table 8 in order that the positive electrode terminal 11 is received in the recess part 81 formed in the support table 8.

The laser welding equipment 9 has a function of welding the cover 21 and the casing body 20 by emitting the laser beam L to the thin part 28 on the basis of the control signal of the controller 83. Because the laser welding equipment 9 is movable, it is able to the laser beam L along the thin part 28. Furthermore, the method for the welding is not limited thereto. For example, the laser welding equipment 9 may weld the edge of the cover 21 and the battery case 10 while the laser welding equipment 9 is fixed and the casing body 20 having the cover 21 fitted to the outside thereof is rotated.

The controlling section 83 includes, for example, a CPU or the like mounted on a PC, and the controlling section 83 transmits control signals to the reversing mechanism 82, the laser welding equipment 9, the driving mechanism 84 to operate them.

By the manufacturing machine 2 the casing body 20 is reversed in order that the cover 21 is positioned downward after the outside-fitting is executed. And the laser welding equipment 9 is able to the laser beam L downward and the metal melted at the thin part 28 enters a boundary surface between the external surface 20b of the casing body 20 and the inner surface of the cover 21. Accordingly, as described above, the air-tightness of the battery case is improved by the welding.

Furthermore, the technical scope of the invention is not limited to the above-described embodiment. Various modifications may be made within the scope not departing from the spirit of the invention. For example, even when the concave part or the convex part is not formed, it is still effective to form the battery case because of the outside-fitting.
The type of the recessed part or the protruding part is modified in various forms. A part of external surface of the casing body may be convexed toward the inside of the casing body, a part of the inner wall of the cover may be convexed toward the outside of the cover. When the fitting part is protruding toward the inside of the battery case, the unevenness of the outer surface of the battery case may be reduced. Further, when the fitting part is protruding outward from the inside of the battery case, it is possible to avoid interference between the inner member of inner of the battery case and the fitting part. Further, the concave part or the convex part may also be provided only at a part of the battery case in the circumferential direction.
The casing body may leave both ends that are opened in the axial direction. In this case, the cover may be attached to both openings.

### Reference Signs List

- 1:: SECONDARY BATTERY (BATTERY)
- 2:: SECONDARY BATTERY MANUFACTURING MACHINE
- 8:: SUPPORT TABLE
- 9:: LASER WELDING EQUIPMENT
- 10:: BATTERY CASE
- 11:: POSITIVE ELECTRODE TERMINAL (ELECTRODE TERMINAL)
- 12:: NEGATIVE ELECTRODE TERMINAL (ELECTRODE TERMINAL)
- 13:: POSITIVE ELECTRODE SHEET
- 13a:: POSITIVE ELECTRODE TAB
- 13b:: CONNECTION PART
- 14:: NEGATIVE ELECTRODE SHEET
- 14a:: NEGATIVE ELECTRODE TAB
- 14b:: CONNECTION PART
- 15:: SEPARATOR
- 20:: CASING BODY
- 20a:: OPENING
- 20b:: EXTERNAL SURFACE
- 21:: COVER
- 22:: ELECTROLYTE INJECTION PORT
- 23:: FITTING PART
- 24:: PROTRUDING PART
- 25:: RECESSED PART
- 26:: WELDING PART
- 27:: ATTACHMENT HOLE
- 28:: THIN PART
- 30:: CASING BODY
- 31, 32:: COVER
- 33:: TOPPLATE
- 34:: SIDE WALL
- 81:: RECESS PART
- 82:: REVERSING MECHANISM
- 83:: CONTROLLER
- 84:: DRIVING MECHANISM
- 85:: COVER FITTING MECHANISM
- L:: LASER BEAM
- S10 TO S12, S20 TO S22, S30 TO S33:: STEP

## Claims

1. A battery comprising:
a casing body having an opening opened from at least one edge thereof; and
a cover having an outer diameter larger than the diameter of the opening and covering the opening;
wherein the cover is fitted to the outside of the casing body by an outside-fitting, and the edge of the cover and the casing body are welded to each other to form a battery case.

2. The battery according to claim 1,
wherein the cover has a thin part at the edge, and
the thin part is welded to the main part.

3. The battery according to claim 2,
wherein the casing body has a convex part toward the outside of the case, the cover has a concave part corresponding to the shape of the convex part, and the convex part is fitted to the concave part each other for the outside-fitting.

4. A battery manufacturing machine for manufacturing the battery according to any one of claims 1 to 3, the battery manufacturing machine comprising:
a support table on which the battery is placed;
a reversing mechanism that holds and reverses the casing body;
a welding machine for welding the edge of the cover and the casing body to each other; and
a controller that controls the reversing mechanism and the welding machine,
wherein the support table is provided with an recess part that receives an electrode terminal of the battery, and
the controller controls the reversing mechanism in order that the casing body is reversed and put on the support table for the electrode terminal to received in the recess part, and the controller controls the welding machine in order that the edge of the cover and the casing body are welded to each other by the welding machine.

5. A battery manufacturing method of manufacturing the battery according to any one of claims 1 to 3, the battery manufacturing method comprising:
fitting the cover to the outside of the casing body by the outside-fitting;
reversing the casing body having the cover fitted to the outside thereof; and
welding the edge of the cover and the battery body to each other after the reversing.
